# EUROPEAN PATENT APPLICATION

(11) **EP 4 108 560 A1**
(43) Date of publication of application: **28.12.2022**
(21) Application number: 21191475.9
(22) Date of filing: 16.08.2021
(51) Int. Cl.: B62K 11/00, B62K 13/06, B62J 25/04, B62K 5/01, B62K 23/08, B60L 15/20, B62B 9/22, B62D 21/18, B62M 7/12, B62L 3/04

(54) **SELF-BALANCING SCOOTER AND CONTROL METHOD THEREOF, AND KART POWERED BY THE SAME**

(30) Priority: 24.06.2021 CN 202110706629
(71) Applicant: Shenzhen Baike Electronic Commerce Co., Ltd., Shenzhen City, Guangdong Province (CN)
(72) Inventor: PENG, Mingwei, Shenzhen City (CN)
(74) Representative: Viering, Jentschura & Partner mbB Patent- und Rechtsanwälte

(57) **Abstract**

Provided are a self-balancing scooter and a control method thereof, and a kart powered by the same. The self-balancing scooter includes two scooter bodies (1) on which foot boards (2) and motorized wheels (3) are disposed, and a rotating shaft device (4), where the rotating shaft device includes a rotating shaft (41), two axle seats (421, 422, 42), and a torsion limiting mechanism (43). The torsion limiting mechanism controls a rotation angle by the fit between a limiting portion (433) on the rotating shaft and a fitting portion (411, 412) on one of the two axle seats. The present disclosure realizes torsion limit by directly using the rotating shaft and the axle seats without the use of an additional element (for example, a limiting shaft), thus simplifying the structure of the rotating shaft device and facilitating assembly.

## Description

### TECHNICAL FIELD

The present disclosure relates to a means of transport, and more particularly relates to a self-balancing scooter and a control method thereof, and a kart powered by the same.

### BACKGROUND

Means of transport such as self-balancing scooters, scooters, and swing cars are increasingly popular among young consumers; especially, many primary and secondary school students are using electric self-balancing scooters. The existing self-balancing scooter includes two inner covers, and a rotary mechanism is fixed between a first inner cover and a second inner cover. For example, the patent with the publication No. CN104958894A discloses a self-balancing electric vehicle. A rotary mechanism includes one sleeve, two bearings, and two snap rings, where two ends of the sleeve are fixed at the inner ends of a first inner cover and a second inner cover respectively, and the bearings are fixed on the sleeve and further fastened to the inner covers via the snap rings, so that the left and right inner covers can be rotated under the effect of the rotary mechanism.

In order to mount the rotary mechanism, a cylindrical cylinder may be arranged at inward ends of the first inner cover and the second inner cover, and the sleeve and the bearings are mounted from outside to inside in the cylinders via the snap rings. That is, two opposite ends of the first inner cover and the second inner cover are separately disposed with a cylinder, and the bearing is disposed in the cylinder and can rotate relative to the inner wall of the cylinder, so that the first inner cover and the second inner cover are rotatably connected via the bearings. In order to avoid an excessively large relative rotation angle between the first inner cover and the second inner cover, the electric self-balancing scooter further includes a limiting shaft, where a part of the limiting shaft that is located in the second inner cover is longer than that in the first inner cover. The limiting shaft is disposed in parallel to the bearings, where one end of the limiting shaft is fixed inside the first inner cover and the other end extends into the second inner cover. The second inner cover is disposed with an arc-shaped limiting groove corresponding to the limiting shaft. When the first inner cover and the second inner cover are rotated relative to each other, the limiting groove can limit the maximum rotation angle between the first inner cover and the second inner cover by the fit between the limiting shaft and the limiting groove.

The foregoing self-balancing scooter has a complicated rotating shaft device. Moreover, with the growth of the use time, the limiting shaft is easy to wear and even loosen and fall off, thus having a potential safety hazard.

Therefore, the prior art needs to be modified and improved.

### SUMMARY

In view of the shortcomings in the prior art, the present disclosure aims to provide a self-balancing scooter and a control method thereof, and a kart powered by the same, so as to solve the problem of a complicated structure of a torsion limiting mechanism of the self-balancing scooter.

To solve the foregoing technical problem, the present disclosure adopts the following technical solution:
A self-balancing scooter is provided, which includes two scooter bodies on which foot boards and motorized wheels are disposed, and further includes a rotating shaft device configured to rotate the two scooter bodies relative to each other, where the rotating shaft device includes:
a rotating shaft, two axle seats fitted into the rotating shaft and configured to connect the two scooter bodies, and a torsion limiting mechanism used to limit a relative rotation angle when the axle seats rotate about the rotating shaft; and
the torsion limiting mechanism includes a limiting portion disposed on one end of the rotating shaft and a fitting portion disposed on one axle seat and fitted into the limiting portion.

As an improvement to the present disclosure, the limiting portion is a limiting notch provided on the rotating shaft, the fitting portion is a projection or a bent portion disposed on the axle seat, and the projection or the bent portion is configured to rotate in the limiting notch.

Alternatively, the limiting portion is a limiting notch provided on the axle seat, the fitting portion is a projection or a bent portion disposed on the rotating shaft, and the projection or the bent portion is configured to rotate in the limiting notch.

As an improvement to the present disclosure, the rotating shaft device further includes a sleeve which is sleeved on one end of the rotating shaft, the sleeve has an interference fit with one of the axle seats, and the other axle seat has an interference fit with the other end of the rotating shaft.

As an improvement to the present disclosure, each scooter body includes an upper casing and a lower casing, and the motorized wheel is disposed on one end of the corresponding lower casing.

As an improvement to the present disclosure, the self-balancing scooter further includes a control mainboard configured for controlling a motion status of the motorized wheels, where the control mainboard is disposed in the lower casing.

As an improvement to the present disclosure, the self-balancing scooter further includes a battery, where the battery is disposed in the lower casing.

As an improvement to the present disclosure, each foot board is disposed with mounting columns, an inverted fastener connected to the corresponding scooter body is provided on a lower end of each mounting column, and mounting holes into which the mounting columns are fitted are provided on the scooter body.

The present disclosure further provides a control method of the self-balancing scooter, which includes the following steps:
in a power-on state, controlling a rotation direction and/or rotation speed of the motorized wheels according to angles of the foot boards; and
when a cradle mode is started, controlling the motorized wheels to make a reciprocating motion.

The present disclosure further provides a kart powered by a self-balancing scooter, which includes a kart frame assembly provided with a seat assembly, a steering control assembly comprising a steering wheel and front wheels controlled by the steering wheel, and a forward and backward control assembly, the steering control assembly, and the kart further includes the foregoing self-balancing scooter; and
the forward and backward control assembly includes an oscillating axle fixedly connected to the self-balancing scooter and a handle assembly fixedly connected to the oscillating axle; the oscillating axle is rotatably connected to the kart frame assembly; and the self-balancing scooter is located at a rear end of the kart frame assembly.

In the self-balancing scooter and the control method thereof, and the kart powered by the same provided by the present disclosure, the self-balancing scooter includes two scooter bodies on which foot boards and motorized wheels are disposed, and a rotating shaft device, where the rotating shaft device includes a rotating shaft, two axle seats, and a torsion limiting mechanism. The torsion limiting mechanism controls a rotation angle by the fit between a limiting portion on the rotating shaft and a fitting portion on one axle seat. Compared to the prior art, the present disclosure realizes torsion limit by directly using the rotating shaft and the axle seats without the use of an additional element (for example, a limiting shaft), thus simplifying the structure of the rotating shaft device and facilitating assembly.

### BRIEF DESCRIPTION OF THE DRAWINGS

FIG. 1 is a schematic three-dimensional structural diagram of a self-balancing scooter provided by an embodiment of the present disclosure;
FIG. 2 is a schematic exploded structural diagram of the self-balancing scooter provided by an embodiment of the present disclosure;
FIG. 3 is a schematic three-dimensional structural diagram of a first rotating shaft device of the self-balancing scooter provided by an embodiment of the present disclosure;
FIG. 4 is a schematic exploded structural diagram of the first rotating shaft device of the self-balancing scooter provided by an embodiment of the present disclosure;
FIG. 5 is a schematic exploded structural diagram of a second rotating shaft device of the self-balancing scooter provided by an embodiment of the present disclosure;
FIG. 6 is a schematic exploded structural diagram of a third rotating shaft device of the self-balancing scooter provided by an embodiment of the present disclosure;
FIG. 7 is a schematic structural diagram of a foot board of the self-balancing scooter provided by an embodiment of the present disclosure;
FIG. 8 is a schematic structural diagram of a scooter body of the self-balancing scooter provided by an embodiment of the present disclosure;
FIG. 9 is a schematic structural diagram of a motorized wheel from which side covers are removed in the self-balancing scooter provided by an embodiment of the present disclosure;
FIG. 10 is a schematic structural diagram of a side cover of the motorized wheel in the self-balancing scooter provided by an embodiment of the present disclosure;
FIG. 11 is a sectional diagram of the motorized wheel of the self-balancing scooter provided by an embodiment of the present disclosure;
FIG. 12 is a schematic structural diagram of a rotor and a stator of the motorized wheel of the self-balancing scooter provided by an embodiment of the present disclosure;
FIG. 13 is a schematic structural diagram of a stator of the motorized wheel of the self-balancing scooter provided by an embodiment of the present disclosure;
FIG. 14 is a flowchart of a control method of the self-balancing scooter provided by an embodiment of the present disclosure;
FIG. 15 shows a kart powered by a self-balancing scooter provided by an embodiment of the present disclosure; and
FIG. 16 is a schematic structural diagram of a forward and backward control assembly of the kart powered by a self-balancing scooter provided by an embodiment of the present disclosure.

Meanings of numerals:
1. Scooter body, 2. Foot board, 3. Motorized wheel, 4. Rotating shaft device, 41. Rotating shaft, 42. Axle seat, 43. Torsion limiting mechanism, 433. Limiting notch, 44. Sleeve, 421. First axle seat, 422. Second axle seat, 45. Axial stop collar, 46. Spacer, 434. Clamping groove, 47. Snap ring, 411. Inward bent portion, 412. Projection, 413. Outward bent portion, 11. Upper casing, 12. Lower casing, 13. Control mainboard, 14. Battery, 21. Mounting column, 22. Inverted fastener, 111. Mounting hole, 23. Open groove, 24. Elastic-element pressed portion, 25. Reinforcing rib, 26. Protrusion, 27. Fastening column, 28. Threaded hole, 113. Fastening hole, 114. Mounting groove, 115. Fixing groove, 31. Axle, 32. Tire, 33. Side cover, 311. Inlet, 312. Outlet, 313. Wiring duct, 321. First tooth surface, 331. Second tooth surface, 332. Bearing part, 34. Stator, 35. Core winding, 36. Connecting part, 37. Magnetic steel sheet, 38. Rotor, 381. Annular groove, 382. Dynamic guide, 341. Static guide, 383. Light control board, 384. Plastic clip, 385. Fastening groove, 386. Insulating plate, 391. Upper bracket, 392. Lower bracket, 393. Pushing piece, 16. Loudspeaker

### DETAILED DESCRIPTION OF THE EMBODIMENTS

To make the objective, technical solutions, and advantages of the present disclosure clearer, the present disclosure is further described in detail below with reference to the accompanying drawings and specific embodiments. It should be noted that, the specific embodiments described herein are only used to explain the present disclosure, and are not intended to limit the present disclosure.

It should be noted that when a component is described to be "mounted on", "fixed on", or "disposed on" another component, it can be directly on another component or there may be a centered component at the same time. When a component is described to be "connected to" another component, it may be directly connected to another component or there may be a centered component at the same time.

It should be further noted that, the orientation terms "left", "right", "up", and "down" in the embodiments of the present disclosure are only relative concepts or take the normal use state of the product as reference, and should not be considered restrictive.

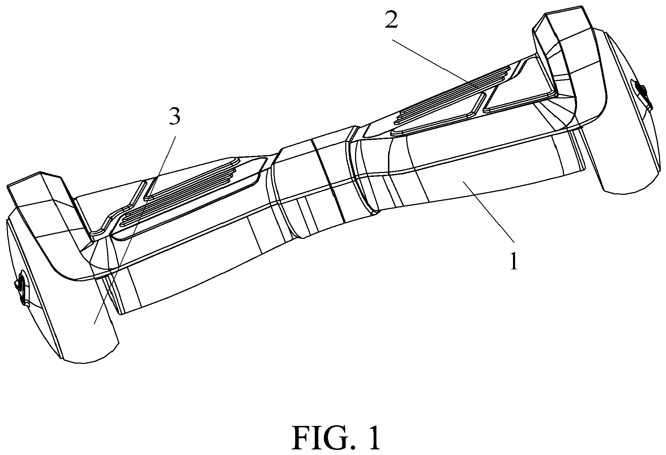

The self-balancing scooter of the present disclosure is an electric self-balancing scooter which can be used as a means of transport. Referring to FIGS. 1, 2, 3, and 4, the self-balancing scooter includes two scooter bodies 1, two foot boards 2, two motorized wheels 3, and a rotating shaft device 4. The foot boards 2 and the motorized wheels 3 are mounted on the two scooter bodies 1 respectively; and the rotating shaft device 4 is used to enable the two scooter bodies 1 to rotate relative to each other. After a user stands on the foot boards 2, the scooter bodies 1 are controlled to make corresponding movement as the human body leans forward, leans backward, or stands erectly, so that the self-balancing scooter completes postures such as moving forward and backward, stopping, and the like.

The rotating shaft device 4 includes a rotating shaft 41, two axle seats 42, and a torsion limiting mechanism 43. The two axle seats 42 are fitted into the two ends of the rotating shaft 41 respectively, and configured to connect the two scooter bodies 1; and are used to control the two scooter bodies 1 to move in straight line, turn, and the like. The torsion limiting mechanism 43 includes a limiting portion disposed on one end of the rotating shaft 41 and a fitting portion disposed on one axle seat 42 and fitted into the limiting portion; and is used to limit a relative rotation angle when the axle seats 42 rotate about the rotating shaft 41, thus avoiding an excessively large rotation angle and ensuring the riding safety.

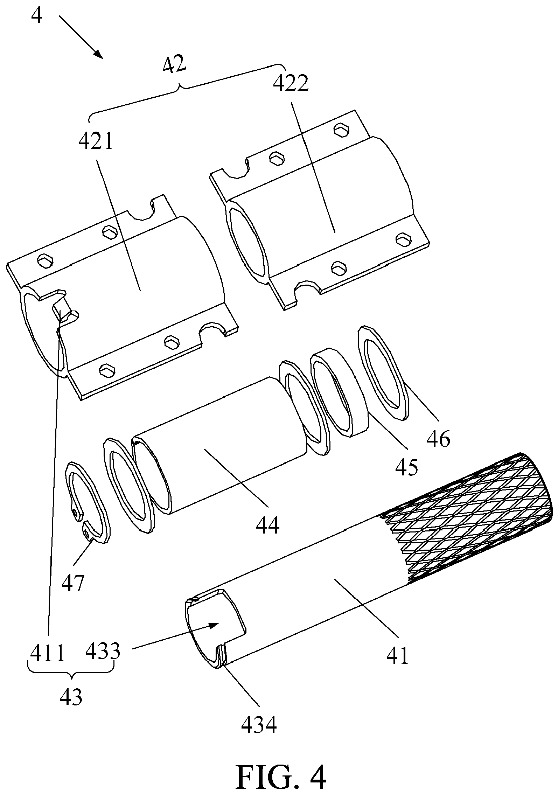

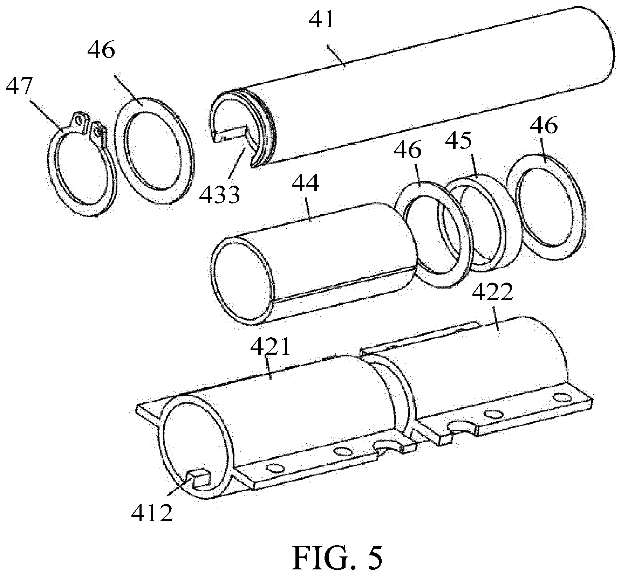

In an embodiment, the limiting portion is a limiting notch 433 provided on the rotating shaft 41, and the fitting portion is a projection 412 (as shown in FIG. 5) or a bent portion (which is an inward bent portion 411 or an outward bent portion 413 in FIG. 4) disposed on the axle seat 42. The projection 412 or the bent portion can rotate in the limiting notch 433, and a rotation angle is controlled by controlling the width of the limiting notch 433.

In an alternative embodiment, the rotating shaft device 4 further includes a sleeve 44 which is sleeved on one end of the rotating shaft 41. The sleeve 44 has an interference fit with one of the axle seats 42, and the other axle seat 42 has an interference fit with the other end of the rotating shaft 41. For example, the left end of the rotating shaft 41 has an interference fit with the axle seat 42 for mounting the left scooter body 1, and the right end of the rotating shaft 41 is in rotatable sleeve connection with the sleeve 44. The sleeve 44 further has an interference fit with the axle seat 42 for mounting the right scooter body 1. The two axle seats 42 can be fixed to the left and right scooter bodies respectively via bolts or by other means, so that the left and right scooter bodies 1 simultaneously rotate to control the self-balancing scooter to move forward or backward or separately rotate to control the self-balancing scooter to make a turn.

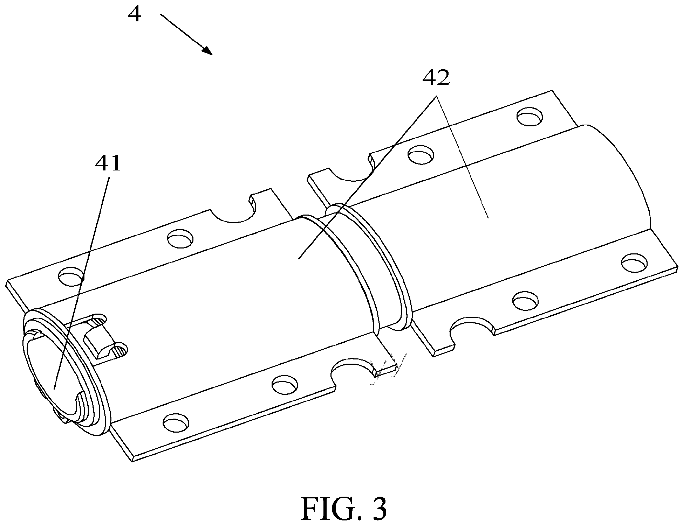

As shown in FIGS. 3 and 4, the rotating shaft 41 is a tubular structure, and the two axle seats 42 are a first axle seat 421 and a second axle seat 422. The first axle seat 421 is sleeved on the left end of the rotating shaft 41 via the sleeve 44 and the second axle seat 422 is fixedly mounted on the right end of the rotating shaft 41. The second axle seat 422 and the first axle seat 421 are spaced by an axial stop collar 45 and a spacer 46, avoiding the first axle seat 421 and the second axle seat 422 from abrading each other when rotating out of synchronism. An end portion (for example, the left end) of the rotating shaft 41 is provided with a clamping groove 434 in which a snap ring 47 is fitted. The snap ring 47 and the axial stop collar 45 cooperate to limit an axial movement of the first axle seat 421 along the rotating shaft, so that the first axle seat 421 is able configured to rotate about the rotating shaft 41.

In a first torsion limiting mechanism 43 of the present disclosure, the limiting portion is a limiting notch 433 provided on the rotating shaft 41, and the fitting portion is an inward bent portion 411 formed by bending from a partial region at the end portion of the first axle seat 421. The width of the limiting notch 433 is 1/5 to 1/3 of the circumference of the cross section of the rotating shaft. When the first axle seat 421 is enabled to rotate about the rotating shaft 41 clockwise as the scooter body 1 rotates, the inward bent portion 411 moves in the limiting notch 433. When the inward bent portion 411 moves to one end portion of the limiting notch 433, the end portion hinders continuous movement of the inward bent portion 411, thus preventing the first axle seat 421 from continuously rotating about the rotating shaft 41 clockwise.

On the contrary, when the first axle seat 421 rotates about the rotating shaft 41 counterclockwise, the inward bent portion 411 moves in the limiting notch 433. When the inward bent portion 411 moves to the other end portion of the limiting notch 433, this end portion hinders continuous movement of the inward bent portion 411, thus preventing the first axle seat 421 from continuously rotating about the rotating shaft 41 counterclockwise. Thus, a relative rotation angle formed when the first axle seat 421 rotates about the rotating shaft 41 can be limited. Because the second axle seat 422 is fixed on the rotating shaft 41, the rotating shaft 41 is also enabled to move in the sleeve 44 as the second axle seat 422 rotates, and the rotation angle is also limited by the fit between the limiting notch 433 and the inward bent portion 411. Whichever of the two scooter bodies rotates, the relative rotation angle formed when the first axle seat 421 or the second axle seat 422 rotates about the rotating shaft 41 can be limited.

The present disclosure arranges the limiting notch 433 on one end of the rotating shaft 41 and further arranges the inward bent portion 411 on the first axle seat 421 at a position corresponding to the limiting notch 433; and the torsion limiting mechanism 43 of the self-balancing scooter is formed by combination of the two. This manner dispenses with a pin or limiting shaft of the torsion limiting mechanism 43 in the rotating shaft device 4 of the existing self-balancing scooter, so that the structure is simple and is easy to assemble. Moreover, the problem that the pin or limiting shaft of the existing torsion limiting mechanism 43 easily loosens and falls off due to vibration or growth of the use time is solved, thus improving safety and reliability.

As shown in FIG. 5, in a second torsion limiting mechanism 43 of the present disclosure, the limiting portion is a limiting notch 433 provided on the rotating shaft 41, and the fitting portion is a projection 412 provided on the inner wall of the axle seat 42. The projection 412 is configured to rotate in the limiting notch 433. Because a rotation manner is identical with that of the first torsion limiting mechanism 43 in the foregoing description, the details are not described herein again.

In the drawings of the foregoing embodiments, there are one limiting portion and one fitting portion. Definitely, there may be two or more limiting portions and fitting portions in other embodiments. For example, when two torsion limiting mechanisms 43 are used, they may be disposed opposite each other or arranged at a certain angle.

Correspondingly, the positions of the limiting portion and the fitting portion may be swapped. For example, the limiting portion is a limiting notch 433 provided on the axle seat, and the fitting portion is a projection 412 or a bent portion on the rotating shaft 41. The projection 412 or the bent portion is able configured to rotate in the limiting notch 433.

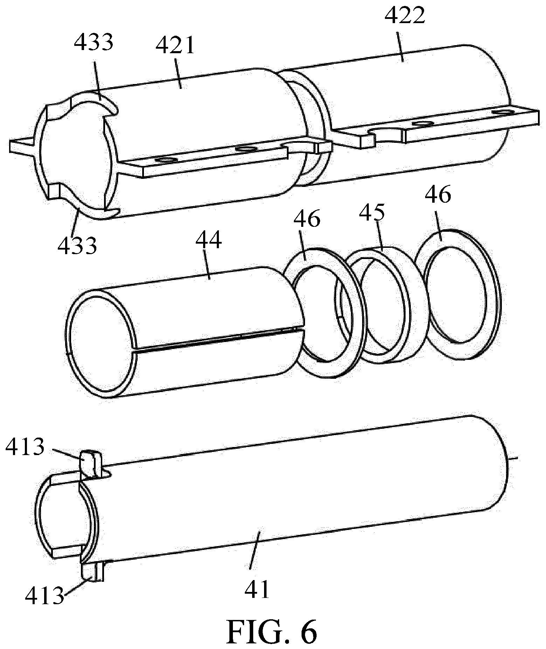

As shown in FIG. 6, in a third torsion limiting mechanism 43 of the present disclosure, the limiting portion is a limiting notch 433 provided on the axle seat (for example, the first axle seat 421), and the fitting portion is an outward bent portion 413 provided on the rotating shaft 41. The outward bent portion 413 is configured to rotate in the limiting notch 433. Because a rotation manner of the third torsion limiting mechanism 43 is identical with that of the first and second torsion limiting mechanism 43, the details are not described herein again.

In the drawings of the foregoing embodiments, there are one limiting portion and one fitting portion. Definitely, there may be two or more limiting portions and fitting portions in other embodiments. When two torsion limiting mechanisms 43 are used, they may be disposed opposite each other or arranged at a certain angle.

Likewise, this embodiment may use one limiting portion and one fitting portion, or may also use two or more limiting portions and fitting portions. For example, when two torsion limiting mechanisms 43 are used, they may be disposed opposite each other (as shown in FIG. 6) or arranged at a certain angle.

In addition, the fitting portion may also be a projection provided on the outer wall of the rotating shaft 41 and located in the limiting notch 433, as long as the relative rotation angle formed when one axle seat 42 rotates about the rotating shaft 41 can be controlled. The present disclosure does not limit a specific structure of the torsion limiting mechanism 43.

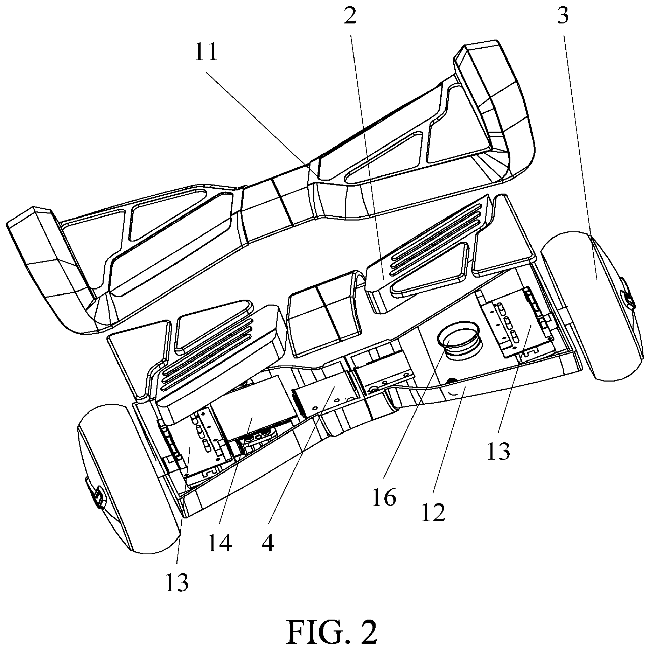

Referring to FIGS. 1 and 2 continuously, each scooter body 1 includes an upper casing 11 and a lower casing 12, and the motorized wheel 3 is disposed on one end of the lower casing 12. Compared to a conventional manner in which the motorized wheels 3 are disposed on the upper casings 11, the present disclosure facilitates mounting, dismounting, and overhaul of the motorized wheels 3.

Alternatively, the self-balancing scooter of the present disclosure further includes a control mainboard 13 configured for controlling a motion status of the motorized wheels 3. The control mainboard 13 is disposed in the lower casing 12, and controls the corresponding motorized wheel 3 to rotate forward, stop, or rotate backward according to a user control instruction. In order to rationally use the space and facilitate control over the motorized wheels 3 on the two scooter bodies 1, there are two control mainboards 13 which are disposed in the lower casings 12 respectively, so that it is not required to turn over the self-balancing scooter for mounting, dismounting, and overhaul as compared with the existing manner in which the control mainboard 13 is disposed in the upper casing 11.

Further, the self-balancing scooter of the present disclosure further includes a battery 14 which is disposed in the lower casing 12, thus facilitating mounting and dismounting of the battery 14, that is, facilitating replacement of the battery 14. In this way, the present disclosure does not need to turn over the self-balancing scooter to replace the battery 14 as compared with the existing manner.

Referring to FIGS. 1 and 2 continuously, a loudspeaker 16 is further disposed in the lower casing 12 and connected to the control mainboards 13, and is used to output a prompt tone. Further, a waterproof and wear-resistant pad (not shown in the figure) is further wrapped around the lower casing 12, thus preventing scratching the lower casing 12 during riding. The waterproof function makes it suitable to ride the scooter on a slippery wet ground. Moreover, the waterproof and wear-resistant pad can be replaced, so as to keep a nice appearance of the self-balancing scooter.

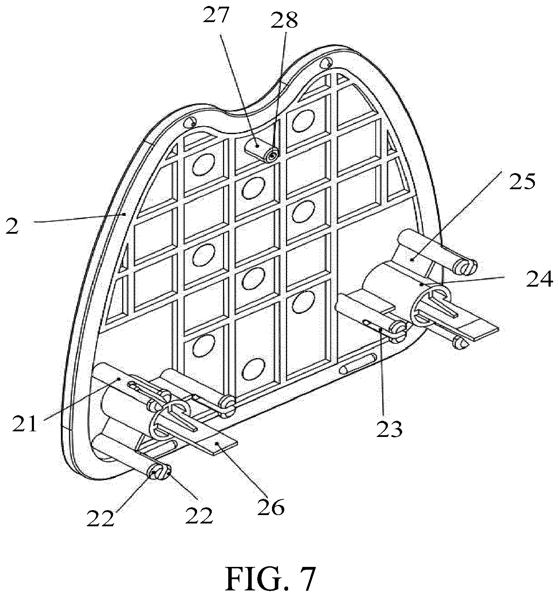

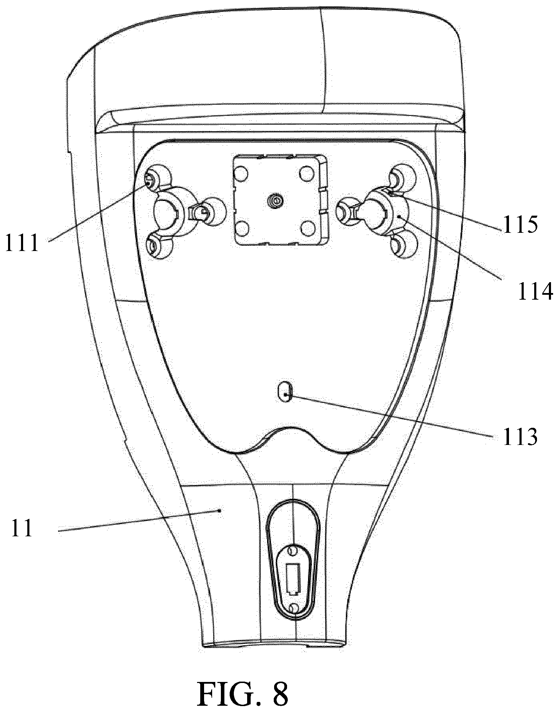

Referring to FIGS. 7 and 8, each of the foot boards 2 is disposed with mounting columns 21, an inverted fastener 22 connected to the corresponding scooter body 1 is provided on a lower end of each mounting column 21, and mounting holes 111 into which the mounting columns 21 are fitted are provided on the scooter body 1. Specifically, the mounting columns 21 are integrally formed on the lower surface of the foot board 2, and pass through the mounting holes 111 on the scooter body 1 to connect the foot board 2 and the scooter body 1 together.

The foot board 2 and the scooter body 1 are connected by a clamping connection between the inverted fasteners 22 on the mounting columns 21 and the mounting holes 111 on the scooter body 1, so as to realize efficient assembly and stable connection of the foot board 2 and the scooter body 1. Thus, a screw is prevented from falling off in the self-balancing scooter and a short circuit risk of the electronic elements is avoided, improving the safety of the self-balancing scooter.

Preferably, the inverted fastener 22 is shaped like a truncated cone, and an upper end surface of the inverted fastener 22 is greater than the lower end surface in diameter, so that a large pressure is produced when the inverted fastener 22 is pressed downwards. Because the inverted fastener 22 is shaped like a truncated cone, a lateral side of the truncated cone is an inclined face. Therefore, when passing through the mounting hole 111, the inverted fastener 22 can effectively guide a contact face of the mounting hole 111 to deform along the inclined face of the truncated cone, so that the mounting columns 21 easily pass through the mounting holes 111 by the foregoing design. After the inverted fastener 22 passes through the mounting hole 111, the mounting hole 111 automatically springs back and shrinks, and the upper end surface of the inverted fastener 22 presses against the lower end surface of the mounting hole 111, thus preventing separation of the mounting column 21 from the mounting hole 111 and avoiding the component from falling off due to vibration, thermal expansion and contraction, or human negligence.

Further, the lower end of each mounting column 21 is provided with an open groove 23 which runs through the inverted fastener 22, so that a relatively large gap is formed at the middle of the inverted fastener 22. Thus, the part of the mounting column 21 in the region where the open groove 23 is provided can be bent inwards with the inverted fastener 22. When passing through the mounting hole 111, the inverted fastener 22 is pressed by the mounting hole 111 and bent inwards, thus decreasing the diameter of the inverted fastener 22, so that the inverted fastener 22 can easily pass through the mounting hole 111. After completely passing through the mounting hole 111, the inverted fastener 22 automatically springs back outwards, and the upper end surface of the inverted fastener 22 presses against the lower end surface of the mounting hole 111, so that the mounting column 21 is clamped at the lower end of the mounting hole 111. The foregoing design enables easy assembly of the foot board 2 and the scooter body 1, thus improving the assembly efficiency and the production efficiency.

Further, an elastic-element pressed portion 24 is further disposed on the foot board 2, and several mounting columns 21 are arranged around the elastic-element pressed portion 24. One end of each mounting column 21 is disposed with a reinforcing rib 25, and the elastic-element pressed portion 24 is connected to the surrounding mounting columns 21 via the reinforcing ribs 25.

Referring to FIGS. 7 and 8 continuously, the elastic-element pressed portion 24 is integrally formed on the lower surface at the rear end of each foot board 2, and is used to control a foot switch of the self-balancing scooter. The lower end of the elastic-element pressed portion is disposed above a trigger device of the foot switch, and a protrusion 26 is disposed on the lower end of the elastic-element pressed portion 24. When a user steps on the foot boards 2, the elastic-element pressed portion 24 is pressed downwards, and thus the protrusion 26 presses and enables the foot switch on the control mainboard 13, to start the self-balancing scooter. An elastic element is connected at the lower end of the elastic-element pressed portion 24, and is preferably a spring. When the user gets off the foot boards 2, the elastic element drives the elastic-element pressed portion 24 to automatically spring back and rise. In this case, the protrusion 26 no longer presses the trigger device of the foot switch, thus turning off the foot switch of the self-balancing scooter.

In this embodiment, there are multiple mounting columns 21 which surround the elastic-element pressed portion 24. The reinforcing ribs 25 are disposed between the mounting columns 21 and the elastic-element pressed portion 24, and used to connect the mounting columns 21 and the elastic element, thus enhancing the strength of connection between the mounting columns 21 and the elastic-element pressed portion 24. The reinforcing ribs 25 further can enhance the rigidity of the mounting columns 21, so that the mounting columns 21 are not easy to bend and deform, thus ensuring stable connection between the mounting columns 21 and the mounting holes 111 and further realizing more stable connection between the foot board 2 and the scooter body 1.

Further, a fastening column 27 that is integrally formed and protrudes downwards is further disposed on the lower surface at the front end of each foot board 2, and a threaded hole 28 is provided on the fastening column 27. A fastening hole 113 is provided on the scooter body 1. A fixed connection of the foot board 2 can be realized by passing a fastening piece through the fastening hole 113 and the threaded hole 28.

If a clamping structure of the inverted fastener 22 is damaged, the foot board 2 may separate from the scooter body 1. In this case, by threaded connection between the fastening column 27 and the scooter body 1, the foot board 2 and the scooter body 1 can still be connected together, thus improving the stability of the connection between the foot board 2 and the scooter body 1. Moreover, sudden separation of the foot board 2 from the scooter body 1 is prevented and unstable riding by the user is avoided, thus preventing danger and further improving the safety of the self-balancing scooter.

A mounting groove 114 for accommodating the elastic-element pressed portion 24 is formed on the scooter body 1. The upper end of the elastic-element pressed portion 24 is arranged in the mounting groove 114, and the lower end thereof passes through the mounting groove 114 and is disposed inside the scooter body 1, so that the elastic-element pressed portion 24 is basically located in the mounting groove 114. Thus, the foot board 2 and the scooter body 1 are joined more closely, saving a certain mounting space for the foot board 2.

Correspondingly, several mounting holes 111 surround the mounting groove 114, and fixing grooves 115 are formed between the mounting groove 114 and the mounting holes 111 and used to accommodate the reinforcing ribs 25. In this way, all protruding parts (the mounting columns 21, the reinforcing ribs 25, and the elastic-element pressed portions) on the foot board 2 are disposed in the grooves or holes on the scooter body 1, so that the foot board 2 and the scooter body 1 are joined more closely, thus further saving the mounting space for the foot board 2.

Two sets of elastic-element pressed portions 24 and two sets of mounting columns 21 are disposed, which are respectively located at the left and right sides of the rear end of the foot board 2. The two sets of elastic-element pressed portions 24, the two sets of mounting columns 21, and the fastening column 27 are fixed in a triangular relationship on the lower surface of the foot board 2. Two sets of corresponding mounting grooves 114 and two sets of corresponding mounting holes 111 are also disposed, which are respectively formed on the left and right sides of the rear end of the corresponding scooter body 1. The two sets of mounting grooves 114, the two sets of mounting holes 111, and the fastening hole 113 are fixed in a triangular relationship on the scooter body 1. It is known that the triangular relationship has high stability, the foot board 2 and the scooter body 1 can be connected more stably by means of the foregoing triangular relationship.

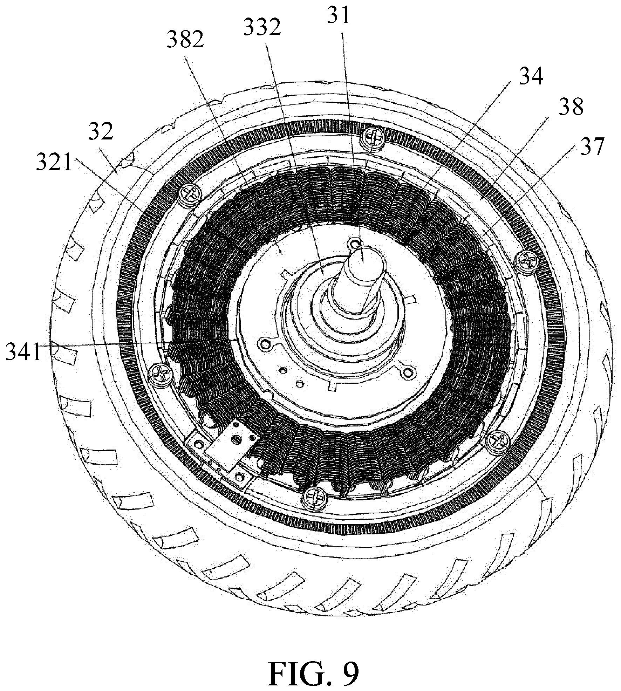

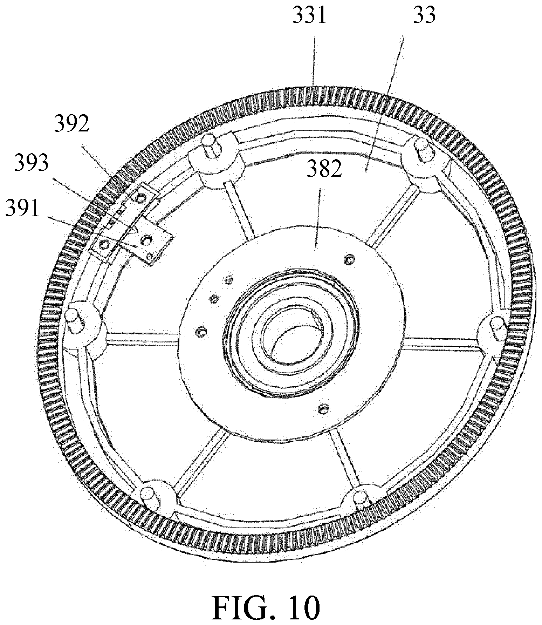

Referring to FIGS. 9, 10, and 11, in the self-balancing scooter of the present disclosure, the motorized wheel 3 includes an axle 31, a tire 32, and side covers 33; and is a light-emitting power wheel. A wheel hub motor is disposed therein, and includes a stator 34, a rotor 38, and a magnetic steel sheet 37. The stator 34 is fixed on the axle 31, the magnetic steel sheet 37 is disposed outside the stator 34, the rotor 38 is disposed outside the magnetic steel sheet 37, and the tire 32 is disposed outside the rotor 38.

The rotor 38 is fixed to the tire 32 via a connecting structure. After the wheel hub motor is powered on, the rotor 38 rotates to drive the tire 32 to rotate. The side covers 33 are respectively disposed at the two sides of the tire 32 and rotatably disposed at the two ends of the axle 31; and are used to enclose the inside rotor 38, stator 34, and magnetic steel sheet 37, so as to protect them.

In this embodiment, the motorized wheel 3 further includes a light emitter, a dynamic guide 382, a static guide 341, and a fixing bracket. The light emitter is preferably an LED lamp and disposed between the tire 32 and the rotor 38. The tire 32 is pervious to light, so that the light from the light emitter can be seen. The dynamic guide 382 is fixed on the side cover 33 and is connected to the light emitter via a wire. The static guide 341 is fixed at one side of the stator 34 and is connected to a power source via a wire; and is further insulated from the stator 34. The dynamic guide 382 and the static guide 341 are pressed against each other so as to supply power to the light emitter via the vehicle power source (for example, a voltage output by a mainboard power module). The fixing bracket is disposed on the side cover 33, and is used to fasten the wires between the dynamic guide 382 and the light emitter onto the side cover to supply power to the light emitter.

The present disclosure uses the vehicle power source to supply power to the light emitters in the motorized wheels 3. Under normal circumstances, the power source inside a vehicle outputs a higher voltage than the battery 14, so that the light emitter achieves a desired light emission effect. Further, by arranging the fixing bracket in the wheel, the wires for supplying power to the light emitter can be separated from a stator winding, and are fixed onto the side cover 33, so that the wires and the stator winding are prevented from contact and electrical conduction to cause damage.

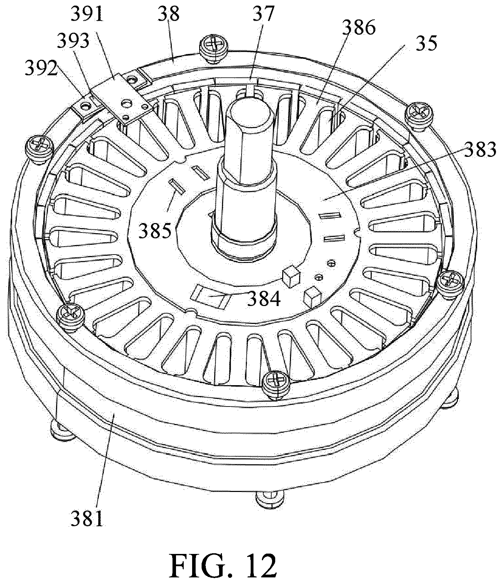

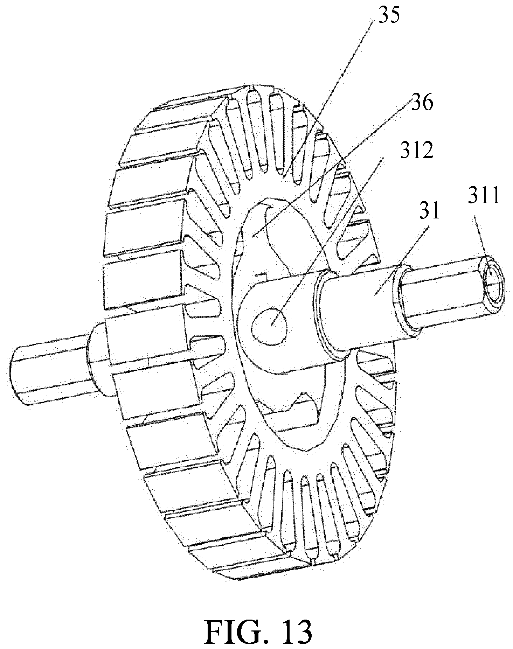

Referring to FIGS. 12 and 13 together, an annular groove 381 is provided on the rotor 38 and is used to accommodate the light emitter. A communication groove communicated with the side cover 33 is provided on the rotor 38 at the side of the annular groove 381, and is used to introduce the wires into the annular groove 381. The annular groove 381 is provided on the surface of the rotor 38 and extends in a circle along the surface of the rotor 38. A light control board 383 may be disposed in the annular groove 381; and a lamp bead for emitting light, namely, the light emitter, is disposed on the light control board.

Further, the fixing bracket is formed by an upper bracket 391 secured on the side cover 33 and a lower bracket 392 secured on the rotor 38, and the upper bracket 391 and the lower bracket 392 contact and are communicated. The upper bracket 391 is connected to the dynamic guide 382 via a wire, and the wire is laid on the side cover 33. The lower bracket 392 is connected to the light emitter via a wire, and the wire is located in the communication groove.

Further, a pushing piece 393 is disposed between the upper bracket 391 and the lower bracket 392. One end of the pushing piece 393 is connected to the upper bracket 391 or the lower bracket 392, and the other end of the pushing piece 393 presses against the lower bracket 392 or the upper bracket 391, thus connecting the upper bracket 391 and the lower bracket 392 via the pushing piece 393. The pushing piece 393 is made of metal, such as, copper. One end of the pushing piece 393 is secured on the upper bracket 391 or the lower bracket 392 via a screw, and correspondingly, the other end of the pushing piece 393 directly presses against the other bracket opposite to the secured end of the pushing piece 393, thus enabling contact and connection between the two brackets. The pushing piece 393 may be slightly longer than an interval between the lower bracket 392 and the upper bracket 391, so that the pushing piece 393 has a pressing force.

The present disclosure has the following advantages by use of such a structure: If the pushing piece 393 is not adopted, it is required to lay a circuit of the light-emitting wheel inside the wheel and then to mount the side covers 33 on the tire 32 as a housing. Such a mounting manner is complicated; especially, it is difficult to introduce the wires from the side cover 33 into a wiring duct 313. However, by use of the upper bracket 391 and the lower bracket 392, it is only required to connect the dynamic guide 382 to the upper bracket 391 and connect the lower bracket 392 to the light emitter, and then to mount the side covers 33 so that the upper bracket 391 and the lower bracket 392 contact and are communicated, thus enabling connection of the light emission circuit. Compared to the conventional manner in which the wires are laid inside the wheel to form the light emission circuit, the connection manner of the light emission circuit in the present disclosure is simpler and more convenient.

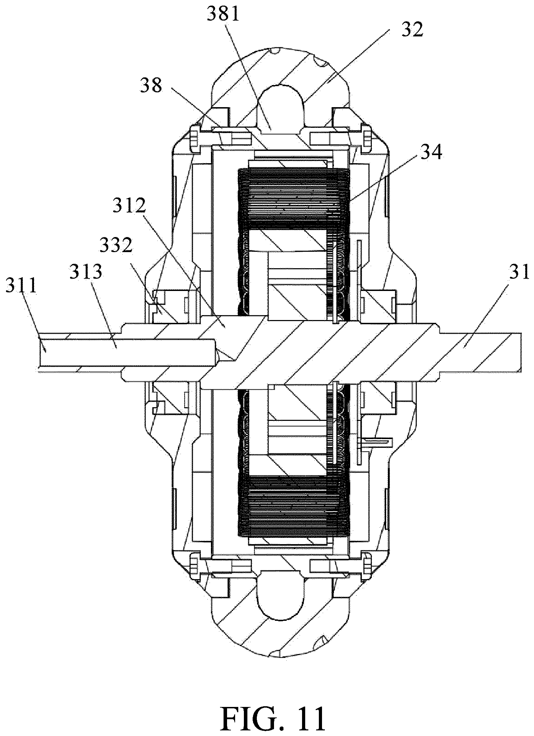

As shown in FIGS. 11 and 13, one end of the axle 31 is provided with an inlet 311 for introducing the wires from the outside, and a section of the axle 31 that is located inside the wheel is provided with an outlet 312 for the wires to go out. The wiring duct 313 for accommodating the wires is disposed between the inlet 311 and the outlet 312.

Specifically, the stator 34 includes a core winding 35 on the outer ring and a connecting part 36 on the inner ring, and the connecting part 36 is used to be connected to the axle 31. The wiring duct 313 and the static guide 341 are located at the two sides of the stator 34 respectively. A plurality of notches is provided on the connecting part 36, so that the wires introduced from the wiring duct 313 pass through the notches and are connected to the static guide 341.

The static guide 341 includes the light control board 383 secured on the connecting part 36, and an insulating plate 386 is disposed between the light control board 383 and the stator 34. The light control board 383 is used to be connected to the circuit. A moving contact assembly in contact with the dynamic guide 382 is disposed on the light control board 383 and a corresponding moving pressed assembly is disposed on the dynamic guide 382, for example, a copper ring set and a brush. The brush presses against the copper ring set for electrical connection, or the foregoing pushing piece 393 is used for connection. The insulating plate 386 is used to insulate the light control board 383 from the stator 34 so as to prevent mutual contact and electrical conduction, thus avoiding fault and damage.

Further, a plastic clip 384 is further disposed on the light control board 383, and at least one set of fastening grooves 385 are provided on the connecting part 36 of the stator 34. The two ends of the plastic clip 384 pass through the light control board 383 and are fastened to the fastening grooves 385, to secure the light control board 383 on one side of the stator 34, thus fastening the light control board 383. In addition to the plastic clip 384, a screw may also be used for fastening. However, it should be noted that, when the screw is used for fastening, clearance avoidance is required around a screw fastening point for insulation, thus preventing electrical conduction. In addition, a cable tie may also be directly used for fastening.

Further, a sunken first tooth surface 321 is provided on the bottom at the two sides of the tire 32, and a protruding second tooth surface 331 corresponding to the first tooth surface 321 is provided on the side cover 33. The second tooth surface 331 presses against the first tooth surface 321, and the side cover 33 and the rotor 38 are connected via a fastening piece. A bearing part 332 is further disposed between the side cover 33 and the axle 31. The sunken first tooth surface 321 cooperates with the two sides of the tire 32 and the rotor 38 so that the second tooth surface 331 on the tire 32 is engaged with the first tooth surface 321, and the tire 32 and the side cover 33 are fastened together by using the tooth surface structure. In this case, the side cover 33 and the tire 32 are connected, and the bearing part 332 enables the side cover 33 and the tire 32 to synchronously rotate.

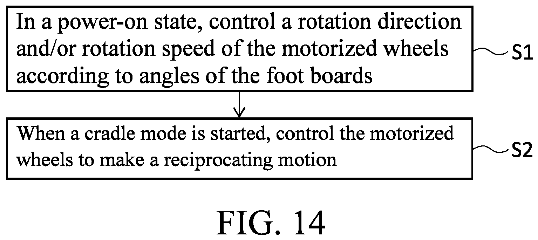

The foregoing embodiments describe the structure of the self-balancing scooter in detail. To better understand the present disclosure, a control method of the self-balancing scooter is further described in detail below with reference to FIG. 14:
S1: In a power-on state, a rotation direction and/or rotation speed of the motorized wheels is controlled according to angles of the foot boards.

In this embodiment, when a user steps on the foot boards, the elastic-element pressed portions are deformed downwards to control the foot switch of the self-balancing scooter to be turned on. In this case, the user controls the self-balancing scooter to move forward, move backward, or stop by leaning forward, leaning backward, or standing erectly. Moreover, the forward or backward movement speed can be controlled by adjusting an angle between the human body and the vertical direction.

During movement of the self-balancing scooter, the motion status and the speed of the self-balancing scooter are monitored in real time. When the speed of the self-balancing scooter reaches a set speed (for example, the speed per hour reaches 10 KM/h), the scooter is ridden at the set maximum speed, thus avoiding a safety hazard due to too fast speed. Further, when the speed of the self-balancing scooter reaches 8 KM/H, a speed limit protection function is enabled to detect the riding speed in real time. When the speed reaches 10 KM/h, the self-balancing scooter is limited to be ridden at this speed.

Further, the method further includes: monitoring an angle of inclination of each foot board, and controlling a motor to stop running when the angle of inclination of the foot board exceeds a set angle. For example, when the human body controls the foot board to incline over 15°, a status light is always on in red and the motor stops running.

Moreover, during riding, the movement of the rotating shaft device can be controlled via the foot boards to make a turn, and a corresponding turn light is turned on. For example, when the right foot board leans forward, the self-balancing scooter is controlled to turn left and a blue indicator light at the left flashes; or when the left foot board leans forward, the self-balancing scooter is controlled to turn right and a blue indicator light at the right flashes. When turning is indicated, the turn light and a fender lamp simultaneously flash, so as to strengthen warning. When the scooter goes straight, the indicator lights at the left and right are always on.

Specifically, before step S1, the control method further includes S01: A loudspeaker outputs a corresponding prompt tone (for example, a voice prompt saying "The device is turned on. Welcome to use.") when a power button on the scooter body is turned on, and fault and power detection is conducted and further it is detected whether to send out a shutdown instruction.

For example, after the power button is short-pressed for one second, a power indicator light is on and a Bluetooth loudspeaker makes a 'boom-boom' sound to start up the device. In this case, a working mode, such as a power-on self-balancing mode, dual mode, or cradle mode, can be selected.

Further, the control method further includes the following process: When the self-balancing scooter is ridden under a self-balancing mode, the device cannot be shut down even when the power button is pressed; and the device can be normally shut down by pressing the power button only when the scooter is ridden under a non-self-balancing mode, thus avoiding a faulty operation when the power button is touched by mistake.

After step S01, the method further includes step S02: When the self-balancing scooter is detected to be faulty, a red fault light flashes and the loudspeaker outputs a corresponding prompt tone (for example, prompt information of a specific fault) for ease of overhaul.

When it is detected that the battery is full, a green indicator light is always on; when it is detected that the battery is low, the green indicator light flashes; and when it is detected that the battery is under-voltage, the green indicator light is always on and the loudspeaker outputs a corresponding prompt tone (for example, a voice prompt saying "Low battery. Please charge timely.").

When the power button detects a shutdown instruction (for example, the power button is long-pressed), the scooter bodies of the self-balancing scooter are calibrated to be horizontal and calibration data is stored. A corresponding prompt tone (for example, a voice prompt saying "Powering off. Thanks for using.") is output after completion of the calibration.

For example, when the temperature in the motor reaches 110°C, the loudspeaker outputs alarm information and the status light flashes red. When the temperature in the motor reaches up to 120°C, motor power protection is cut off and the device is shut down immediately.

In the present disclosure, different faults may be indicated by setting fault codes, thus facilitating maintenance and detection. For example, when the status light flashes red once, it indicates that the control mainboard has a hardware failure (an operational amplifier and an MOS transistor at an end of a board A are faulty); when the status light flashes red twice, it indicates that the control mainboard has a hardware failure (an operational amplifier and an MOS transistor at an end of a board B are faulty); when the status light flashes red three times, it indicates that the control mainboard generates overcurrent; when the status light flashes red four times, it indicates that the board A has Hall failure (mainly the motor or a connector of a connection line is detected to be faulty); when the status light flashes red five times, it indicates that the board B has Hall failure (mainly the motor or a connector of a connection line is detected to be faulty); when the status light flashes red six times, it indicates that the battery is faulty or overcurrent protection is enabled; when the status light flashes red seven times, it indicates that a communication line is faulty; and when the status light flashes red eight times, it indicates that the device is in a protected mode (which may be cancelled by recalibration and balancing). Definitely, other fault codes may also be used.

For another example, during battery detection, when a battery voltage is less than 23V, the red light flashes and the loudspeaker outputs a low battery prompt tone. The control method further includes: a charging yellow light flashing during charging; and when the battery is charged up to 90% or above, the yellow light being on for a long time and the power light being always on in red.

For still another example, when it is detected that the power button is long-pressed for about three seconds, the self-balancing scooter beeps. In this case, a calibration indicator light is on for a long time, and after 3 to 5 seconds, the loudspeaker outputs a calibration completion prompt tone. Then, the device can be re-started.

S2. When a cradle mode is started, the motorized wheels are controlled to make a reciprocating motion. In this case, a baby cradle may be connected to the self-balancing scooter via a tow rope to soothe a baby to sleep, thus helping the user in taking care of the baby.

The present disclosure expands the functions of the self-balancing scooter, so that the self-balancing scooter can serve as a robot to be helpful to the user in addition to conventional functions, so that the user does not need to put the kid to sleep and can do something else, thus improving the degree of intelligence of the self-balancing scooter. Moreover, the self-balancing scooter reciprocates at a constant speed, so that the cradle is controlled to swing smoothly. Compared to a manual control manner, the manner using the self-balancing scooter makes the baby sleep more comfortably.

Further, a movement time of the cradle mode is automatically memorized according to the baby's sleeping time, so that the battery can be saved and the baby can be put to sleep. In addition, during automatic memorization, the time memorization of the cradle mode can be set according to user settings.

Furthermore, the self-balancing scooter of the present disclosure is in communication connection with a mobile phone APP, thus informing the mobile phone APP of the status of the self-balancing scooter. Moreover, in the cradle mode, the baby's heart rate can also be monitored by the mobile phone. When determining that the baby is asleep, the mobile phone APP sends out a control instruction to make the self-balancing scooter stop operation, thus further improving the degree of intelligence of the self-balancing scooter.

Further, the control method of the present disclosure further includes the following process: When the foot boards are pressed by the hands to make no-load rotation to 90°, the motor stops operation and the indicator light is on in red; and in this case, the device returns to normal by pressing the foot boards; When the scooter bodies are stood up, the motor stops operation and the indicator light is on in red; and in this case, the device returns to normal by pressing the foot boards. When the scooter bodies leave the ground, the motor is stopped after making no-load rotation for 1 to 3 seconds, and the indicator light is on in red; and in this case, the device returns to normal by pressing the foot boards. Thus, the motor can be protected.

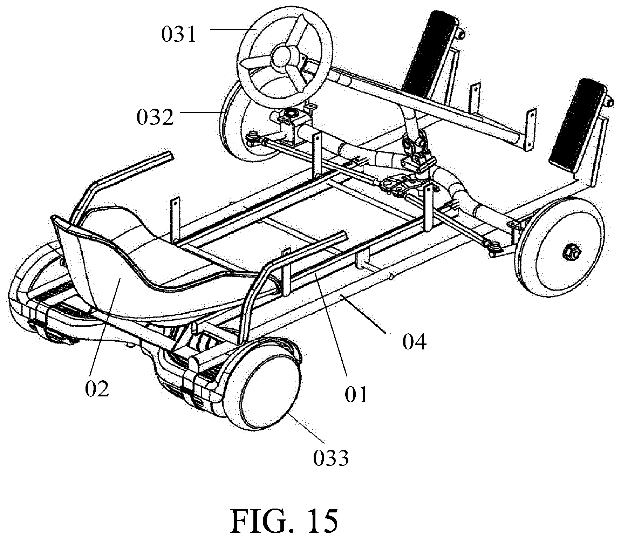

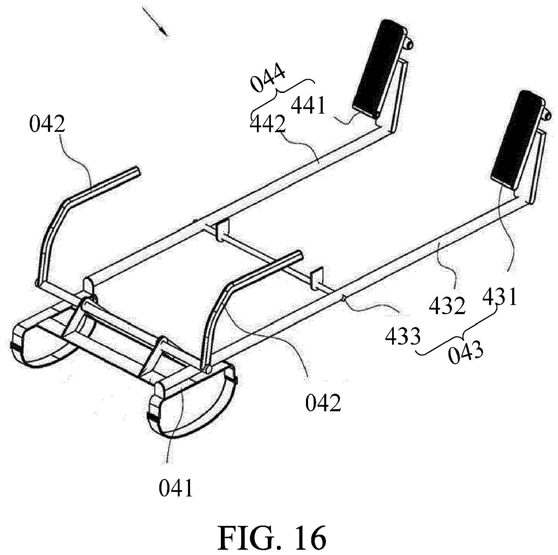

The present disclosure further provides a kart powered by a self-balancing scooter. Referring to FIGS. 15 and 16, the kart includes a kart frame assembly 01 which is provided with a seat assembly 02, a steering control assembly (not numbered in the figure) comprising a steering wheel and front wheels controlled by the steering wheel, a forward and backward control assembly 04, and a self-balancing scooter 05 for driving the kart to move. The steering control assembly includes a steering wheel 031 and front wheels 032 controlled by the steering wheel, thus controlling the kart to make a turn. The forward and backward control assembly 04 includes: an oscillating axle 041 fixedly connected to the two wheel bodies of the self-balancing scooter and a handle assembly 042 fixedly connected to the oscillating axle. The oscillating axle 041 is rotatably connected to the kart frame assembly 01, and the self-balancing scooter 05 is located at a rear end of the kart frame assembly 01 and connected to the oscillating axle 041.

The present disclosure assembles the self-balancing scooter and the frame of the kart, achieving multiple purposes in one vehicle and further saving the purchasing cost of the kart. Because the structure and the working manner of the self-balancing scooter have been described in detail above, the details are not described herein again.

The forward and backward control assembly 04 further includes an accelerator assembly 043. The accelerator assembly 043 includes a gas pedal 431 and an accelerator connecting rod 432 fixedly connected to the gas pedal 431 and capable of rotating relative to the kart frame assembly, where the accelerator connecting rod 432 is fixedly connected to the rear portion of the oscillating axle 041. When a user steps on the gas pedal 431, the accelerator connecting rod 432 drives the rear portion of the oscillating axle 041 so that the oscillating axle 041 and the two-wheel electric self-balancing scooter 05 lean forward, thus implementing forward movement or braking. The accelerator connecting rod 432 is rotatably connected to the seat assembly 02 via a support rod 433, and the support rod 433 is fixedly connected to the seat assembly 02.

Further, the forward and backward control assembly 04 includes a brake assembly 044. The brake assembly 044 includes a brake pedal 441, and a brake connecting rod 442 fixedly connected to the brake pedal 441 and capable of rotating relative to the kart frame assembly 01, where the brake connecting rod 442 is fixedly connected to the front portion of the oscillating axle 041. When the user steps on the brake assembly 044, the brake connecting rod 442 drives the front portion of the oscillating axle 041 to control the oscillating axle 041 and the two-wheel electric self-balancing scooter 05 to keep horizontal or lean backward, thus implementing braking. The brake connecting rod 442 is rotatably connected to the seat assembly 02 via the support rod 433. The accelerator connecting rod and the brake connecting rod are rotatably connected to the support rod. By connection to the oscillating axle 041 at the front and the rear, the self-balancing scooter can lean forward, keep horizontal, or lean backward, thus realizing forward movement, braking, or backward movement.

To sum up, the present disclosure arranges a limiting notch on one end of a rotating shaft, and further arranges an inward bent portion on a second axle seat at a position corresponding to the limiting notch; and a torsion limiting mechanism of a rotating shaft device of the self-balancing scooter is formed by combination of the two. This manner dispenses with a pin of the torsion limiting mechanism in the rotating shaft device of the existing self-balancing scooter, so that the structure is simple and is easy to assemble. Moreover, the problem that the pin of the existing torsion limiting mechanism easily loosens and falls off due to vibration or growth of the use time is solved, thus improving safety and reliability. Moreover, there are various torsion limiting mechanisms diverse in structure, and therefore, a suitable one can be flexibly selected therefrom according to configuration requirements.

The present disclosure disposes electrical parts, such as the control mainboard, the battery, the motorized wheels, and the loudspeaker, in the lower casing, thus facilitating overhaul and replacement of accessories of the self-balancing scooter. Compared to the existing manner in which the self-balancing scooter needs to be turned over for checking, the present disclosure greatly reduces the overhaul difficulty. Further, a waterproof and wear-resistant pad is further disposed on the lower casing, thus preventing scratching the lower casing during riding. The waterproof function makes it suitable to ride the scooter on a slippery wet ground, so that riding is not easily affected by the weather.

In the self-balancing scooter provided by the present disclosure, the foot boards and the scooter bodies are easily assembled and connected stably. Thus, a screw is prevented from falling off in the self-balancing scooter and a short circuit risk of the electronic elements is avoided, improving the safety of the self-balancing scooter.

Moreover, in addition to the conventional transportation function, the self-balancing scooter of the present disclosure further has a cradle driving function which can soothe a baby to sleep, thus achieving a high degree of intelligence. Further, the self-balancing scooter of the present disclosure and a kart can be assembled together, thus saving the purchasing cost of the kart, achieving multiple purposes in one vehicle, and further expanding the functions of the self-balancing scooter.

It can be understood that, for those of ordinary skill in the art, equivalent replacements or changes can be made according to the technical solution and inventive concept of the present disclosure, and all these changes or replacements should fall within the protection scope of the appended claims of the present disclosure.

## Claims

1. A self-balancing scooter, comprising:
two scooter bodies on which foot boards and motorized wheels are disposed; and
a rotating shaft device configured to rotate the two scooter bodies relative to each other, wherein the rotating shaft device comprises:
a rotating shaft;
two axle seats fitted into the rotating shaft and configured to connect the two scooter bodies; and
a torsion limiting mechanism configured to limit a relative rotation angle when the axle seats rotate about the rotating shaft, and
wherein the torsion limiting mechanism comprises:
a limiting portion disposed on one end of the rotating shaft; and
a fitting portion disposed on one axle seat and fitted into the limiting portion.

2. The self-balancing scooter according to claim 1, wherein the limiting portion is a limiting notch provided on the rotating shaft, the fitting portion is a projection or a bent portion disposed on the axle seat, and the projection or the bent portion is configured to rotate in the limiting notch.

3. The self-balancing scooter according to claim 1, wherein the limiting portion is a limiting notch provided on the axle seat, the fitting portion is a projection or a bent portion disposed on the rotating shaft, and the projection or the bent portion is configured to rotate in the limiting notch.

4. The self-balancing scooter according to claim 2, wherein the rotating shaft device further comprises a sleeve which is sleeved on one end of the rotating shaft, the sleeve has an interference fit with one of the axle seats, and the other axle seat has an interference fit with the other end of the rotating shaft.

5. The self-balancing scooter according to claim 3, wherein the rotating shaft device further comprises a sleeve which is sleeved on one end of the rotating shaft, the sleeve has an interference fit with one of the axle seats, and the other axle seat has an interference fit with the other end of the rotating shaft.

6. The self-balancing scooter according to claim 1, wherein each scooter body comprises an upper casing and a lower casing, and the motorized wheel is disposed on one end of the corresponding lower casing.

7. The self-balancing scooter according to claim 6, further comprising a control mainboard configured for controlling a motion status of the motorized wheels, wherein the control mainboard is disposed in the lower casing.

8. The self-balancing scooter according to claim 6, further comprising a battery, wherein the battery is disposed in the lower casing.

9. The self-balancing scooter according to claim 1, wherein each foot board is disposed with mounting columns, an inverted fastener connected to the scooter body is provided on a lower end of each mounting column, and mounting holes into which the mounting columns are fitted are provided on the scooter body.

10. A control method of the self-balancing scooter according to claim 1, comprising the following steps:
in a power-on state, controlling a rotation direction and/or rotation speed of the motorized wheels according to angles of the foot boards; and
when a cradle mode is started, controlling the motorized wheels to make a reciprocating motion.

11. A kart powered by a self-balancing scooter, comprising:
a kart frame assembly which is provided with a seat assembly;
a steering control assembly comprising a steering wheel and front wheels controlled by the steering wheel; and
a forward and backward control assembly, the steering control assembly, wherein the kart further comprises the self-balancing scooter according to claim 1, and
wherein the forward and backward control assembly comprises:
an oscillating axle fixedly connected to the self-balancing scooter;
and
a handle assembly fixedly connected to the oscillating axle, wherein the oscillating axle is rotatably connected to the kart frame assembly, and the self-balancing scooter is located at a rear end of the kart frame assembly.
